# EUROPÄISCHE PATENTSCHRIFT

(11) **EP 1 375 043 B1**
(45) Veröffentlichungstag und Bekanntmachung des Hinweises auf die Patenterteilung: **14.09.2005**
(21) Anmeldenummer: 03013380.5
(22) Anmeldetag: 18.06.2003
(51) Int. Cl.: B23D 61/18, B24D 3/06, C25D 7/06, C25D 15/02, C23C 18/16, C25D 17/06

(54) **Verfahren zur chargenweise Beschichtung von Sägedraht**
Process for charge wise coating of saw wire
Procédé de revêtement discontinu d'un fil de sciage

(30) Priorität: 27.06.2002 DE 10228843
(43) Veröffentlichungstag der Anmeldung: 02.01.2004
(73) Patentinhaber: ESK Ceramics GmbH & Co.KG, 87437 Kempten (DE)
(72) Erfinder: Meyer, Jürgen, 87437 Kempten (DE)
(74) Vertreter: TER MEER - STEINMEISTER & PARTNER GbR

(56) Entgegenhaltungen:
- WO-A-01/85376
- US-A- 3 050 267
- US-B1- 6 261 437

## Beschreibung

Die vorliegende Erfindung beschreibt ein Verfahren zur Beschichtung eines Sägedrahtes mit einem Metall oder einer Metalllegierung, in die Hartstoffe eingelagert sind.

Die Beschichtung eines Drahtes erfolgt derart, dass auf chemischem oder galvanischem Wege ein Metall auf dem Draht abgeschieden wird, in das gleichzeitig die für das Sägen notwendigen Hartstoffpartikel eingelagert werden. Ein solches Verfahren und die vorteilhaften Eigenschaften eines solchen beschichteten Drahtes sind in der PCT Anmeldung mit der Anmeldenummer EP01/04968 beschrieben. Solche Drähte werden verwendet für das Sägen von Werkstoffen, die zum Beispiel in der Halbleiter- und der optischen Industrie eingesetzt werden.

Das Sägen mit einem solchen beschichteten Draht findet vorzugsweise auf Multi-Wire-Sägen statt, die für den Betrieb Drahtlängen > 1000 m benötigen. Die galvanische Beschichtung eines Drahtes findet bisher in kontinuierlich arbeitenden Durchlaufanlagen statt. Der Draht läuft von einer Vorratsspule ab und wird in die Beschichtungsanlage eingespeist. Die Beschichtungsanlage besteht aus linear angeordneten Badbehältern, die die verschiedenen Vorbehandlungschemikalien, Spülwässer und letztendlich das Beschichtungsbad beinhalten. Diese Anlagenausführung erfordert es, dass der Draht über eine Vielzahl von Umlenkrollen durch die einzelnen Bäder geführt wird. Die Umlenkrollen sind dabei zwangsläufig in Badbehältern eingebaut, die aggressive flüssige Medien enthalten. Dies hat nachteiligerweise zur Folge, dass die Lagerstellen der Umlenkrollen schnell verschleißen. Nach abgeschlossener Vorbehandlung gelangt der Draht in das Beschichtungsbad. Hier wird nun eine Metallschicht, in die gleichzeitig Hartstoffpartikel eingelagert werden, auf der Drahtoberfläche abgeschieden. Die Hartstoffpartikel müssen dabei homogen über die Drahtlänge auf dem gesamten Drahtumfang in ausreichender Menge eingebaut werden. Dazu ist es erforderlich, die Abscheiderate niedrig zu halten. Die Durchlaufzeit des Drahtes durch die gesamte Anlage wird durch diesen letzten zeitintensiven Schritt bestimmt. Aufgrund des linearen Drahttransportes und der niedrigen Abscheiderate im Beschichtungsbad sind sehr geringe Drahtdurchlaufgeschwindigkeiten erforderlich, um die gewünschten Schichtdicken und Hartstoffpartikelkonzentrationen zu erhalten. Nach erfolgter Beschichtung wird der Draht am Anlagenende auf einer weiteren Spule aufgewickelt. Ein solches kontinuierliches galvanisches Beschichtungsverfahren ist z.B. aus JP-B-4105 bekannt. Hier wird eine Drahtdurchlaufgeschwindigkeit von 60 mm/min und eine Beschichtungsdauer von 10 Minuten angegeben. Daraus resultiert eine Badlänge von 60 cm. Die Beschichtung einer Drahtlänge von 1000 m würde demzufolge einen Zeitraum von etwa 280 Stunden in Anspruch nehmen. Eine noch geringere Drahtdurchlaufgeschwindigkeit ist erforderlich, wenn die Beschichtung, wie in EP01/04968 beschrieben, mit einem chemisch arbeitenden Verfahren aufgebracht wird. Aufgrund der verfahrensbedingt niedrigeren Abscheiderate reduziert sich die Durchlaufgeschwindigkeit bei sonst gleichen Rahmenbedingungen auf etwa 25 mm/min. Die Beschichtung von 1000 m Draht nimmt demnach bei diesem Verfahren ca. 670 Stunden in Anspruch.

Aus US 6,261,437 B1 ist ein Verfahren bekannt, bei dem ein Draht auf einen Warenträger gewickelt und dann im Chargenbetrieb durch eine konventionelle Beschichtungsanlage gefahren wird.
Aufgabe der Erfindung war es, ein Verfahren zur Verfügung zu stellen, welches es ermöglicht, auch einen Draht mit einer große Drahtlänge in vergleichsweise kurzer Zeit in einer konventionellen Chargenbeschichtungsanlage zu beschichten.

Die Aufgabe wird gelöst durch ein Verfahren gemäß Anspruch 1.

Der Warenträger hat dabei erfindungsgemäß eine zylindrische Form und besteht aus zwei Seitenscheiben (2) und einer Mittelachse (3), die die beiden Seitenscheiben (2) verbindet und stabilisiert wobei die Seitenscheiben (2) je eine Innenseite, eine Außenseite und einen Umfang besitzen und so gefertigt sind, das auf der Innenseite der Scheiben Stangen (4) zwischen den Seitenscheiben in verschiedenen Abständen von der Mittelachse reversibel fixiert werden können und dass der Umfang umlaufende Vertiefungen aufweisen. Es ist fallweise erwünscht, dass die ersten 200 m eines beschichteten Sägedrahtes frei von einer Beschichtung sind, da dies das Auflegen des Drahtgatters in Multi-Wire-Sägen erleichtert. Wenn dies der Fall ist, können diese 200 m Draht in die umlaufende Vertiefung gewickelt und anschließend mit einem Abdeckband vor Flüssigkeitszutritt und damit vor Beschichtung geschützt werden.

Vorzugsweise ist an der Außenseite einer Seitenscheibe (2) ein Antriebsrad befestigt, das einen Drehantrieb in den Behandlungsbädern ermöglicht.

Die Drahtbelegung erfolgt vorzugsweise in der in Anspruch 4 beschriebenen Art und Weise.

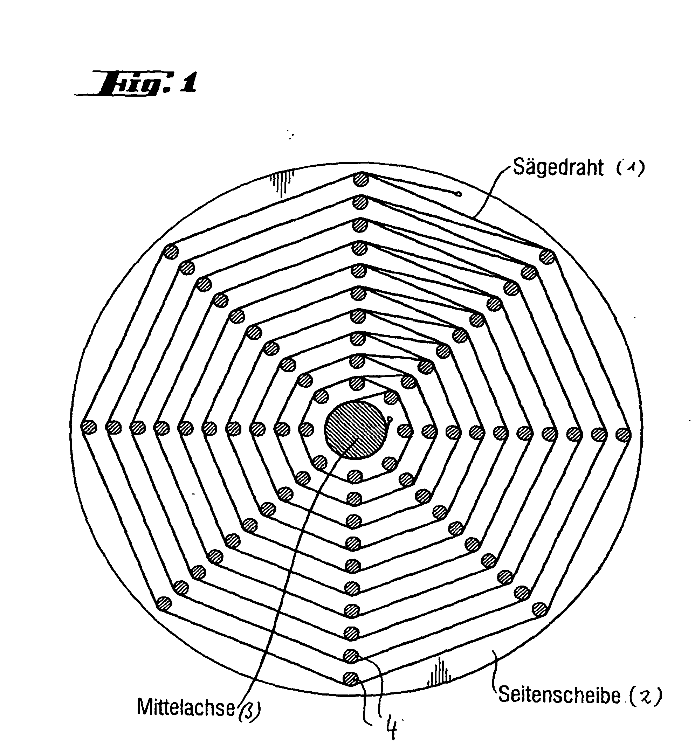

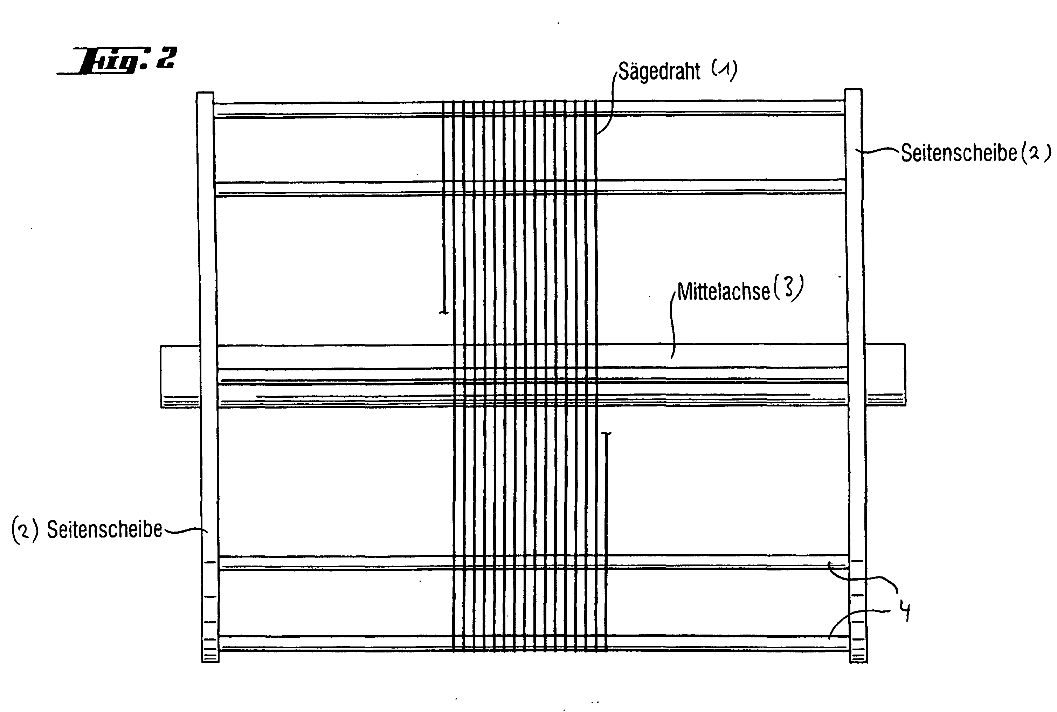

Nachfolgend ist das Verfahren beispielhaft für 2000 m Draht und einen zylindrischen Warenträger mit einem Durchmesser von 300 mm und einer Länge von 380 mm beschrieben. (Fig. 1, Fig. 2) Im ersten Schritt werden in einem Abstand von 5 - 10 cm von der Mittelachse (3) acht Querstangen (4) mit einem Bogenmaßabstand von 45 Grad an den Seitenwänden (2) befestigt, so dass sie gleichsam einen Käfig bilden. Ein Drahtende eines zu beschichtenden Drahtes (1) wird direkt von der Vorratsspule im Bereich der einen Seitenscheibe (2) an einer der Querstangen (4) befestigt. Der Warenträger wird in eine definierte Drehbewegung versetzt wobei gleichzeitig die Drahtzufuhr in einer definierten Linearbewegung parallel zur Mittelachse (3) des Warenträgers erfolgt. Der Draht (1) wird mit der aus den Einstellparametern (Drehbewegung/Linearbewegung) resultierenden Steigung auf den Käfig gewickelt. Bei Erreichen der zweiten Seitenwand (2) wird der Wickelvorgang unterbrochen und der nächste Käfig gebildet aus acht weiteren Querstangen (4), in definiertem Abstand von 1 bis 2 cm zum ersten Käfig aufgelegt. Der bereits für den ersten Käfig beschriebene Wickelvorgang wird fortgesetzt, wobei die Linearbewegung nun in entgegengesetzter Richtung erfolgt. Bei Erreichen der ersten Seitenwand (2) wird der Wickelvorgang abermals unterbrochen und der nächste Käfig gebildet aus acht weiteren Querstangen (4) in definiertem Abstand von 1 bis 2 cm zum zweiten Käfig aufgelegt. Nun wird wie für den ersten Käfig beschrieben der Draht auf den dritten Käfig aufgebracht. So wird bis zum Erreichen des äußersten Käfigs verfahren. Nach Aufbringen der letzten Lage Draht auf den äußersten Käfig wird das Drahtende an der Seitenscheibe (2) befestigt. Bei dem beispielhaft gewählten Warenträger lassen sich so in 10 aufeinanderfolgenden Käfiglagen bis zu 2000 m Draht unterbringen. Das Verfahren ist in Bild 1 schematisch dargestellt.

Da sich der Wickelprozeß automatisieren lässt, ist die Belegung des Warenträgers mit Draht nach max. 120 Minuten abgeschlossen.

Anschließend wird der mit dem Draht (1) belegte Warenträger in eine aus dem Stand der Technik bekannte für solche Beschichtungen übliche Chargenbeschichtungsanlage eingebracht. Er durchläuft die verschiedenen üblichen Vorbehandlungs- und Spülschritte und letztendlich das Beschichtungsbad. Die Anlagendurchlaufzeit beträgt max. 90 Minuten.

Das Umwickeln des beschichteten Drahtes auf eine Drahtspule erfolgt analog dem Auflegevorgang allerdings in umgekehrter Reihenfolge. Es werden dazu Wickelzeiten von max. 90 Minuten benötigt.

Der beschichtete Draht wird vorzugsweise noch einer Wärmebehandlung unterzogen, er kann jedoch auch direkt in einer Säge verwendet werden.

Somit ergibt sich eine Gesamtbehandlungsdauer von max. 5 Stunden für 2000 m Draht; d.h. gegenüber dem in JP-B-4105 beschriebenen Verfahrens wird trotz des verfahrensbedingt langsameren chemischen Beschichtungsprozesses eine um den Faktor 100 schnellere Durchlaufzeit erzielt. Noch deutlicher wird die Effizienz des Verfahrens beim Vergleich mit einem chemischen Beschichtungsverfahren in einer Durchlaufanlage. Hier läßt sich eine Steigerung der Durchlaufzeit um den Faktor 250 erreichen.

Durch die Wahl größerer Warenträger und damit auch Behandlungsbäder lässt sich die pro Charge zu beschichtende Drahtlänge noch steigern. So wurden auf größeren Warenträgern nach beschriebenen Verfahren 7500 m Draht in einer Charge beschichtet, wobei die Gesamtbehandlungsdauer max. 8 Stunden betrug. Die Durchlaufzeit pro m beschichteten Draht wird somit bei größeren Warenträgern nochmals verkürzt.

Zwangsläufig weist der Draht an den Stellen, an denen die Auflage zwischen Drahtoberfläche und Käfigstange stattgefunden hat, eine punktförmige unbeschichtete Stelle auf. In der Umgebung dieses Punktes bildet sich durch den Abschirmeffekt der Käfigstange eine Zone mit verminderter Partikeleinlagerung aus, die max. einem Viertel des Käfigstangenumfanges entspricht und somit im beschriebenen Beispiel eine Ausdehnung von max. 6 mm aufweist. Je nach Durchmesser des betreffenden Käfigs treten diese Zonen in einem Abstand von 40 mm bis 122 mm auf. Bei Sägeversuchen auf Einzeldrahtsägen und Multi-Wire-Drahtsägen hat sich überraschenderweise gezeigt, dass diese Zonen keinen negativen Einfluss auf die Leistungsfähigkeit, die Standzeit oder die Bruchfestigkeit des beschichteten Drahtes haben.
Fig. 1 zeigt einen Querschnitt durch einen mit Draht belegten Warenträger.
Fig. 2 zeigt in Seitenansicht einen teilweise mit Draht belegten Warenträger. Es ist nur ein Ausschnitt der äußeren Lage dargestellt.

## Patentansprüche

1. Verfahren zur raschen Beschichtung eines Drahtes in einer Chargenbeschichtungsanlage bei dem der Draht (1) auf einen Warenträger gewickelt und dann im Chargenbetrieb in der für die Beschichtung eines Drahtes üblichen Weise durch eine Beschichtungsanlage gefahren wird, **dadurch gekennzeichnet, dass** der Warenträger eine zylindrische Form hat und aus zwei Seitenscheiben (2) und einer Mittelachse (3) besteht, die die beiden Seitenscheiben (2) verbindet und stabilisiert wobei die Seitenscheiben (2) je eine Innenseite, eine Außenseite und einen Umfang besitzen und so gefertigt sind, das auf der Innenseite der Scheiben Stangen (4) zwischen den Seitenscheiben in verschiedenen Abständen von der Mittelachse reversibel fixiert werden können und dass der Umfang umlaufende Vertiefungen aufweist.

2. Verfahren nach Anspruch 1 **dadurch gekennzeichnet, dass** an der Außenseite einer Seitenscheibe (2) ein Antriebsrad befestigt ist, das einen Drehantrieb in den Behandlungsbädern der Beschichtungsanlage ermöglicht.

3. Verfahren nach Anspruch 2, **dadurch gekennzeichnet, dass** der Draht wie folgt auf den Warenträger gewickelt wird: in einem definierten Abstand von der Mittelachse (3) werden mehrere Querstangen (4) mit einem definierten Bogenmaßabstand an den Seitenwänden (2) befestigt, so dass sie gleichsam einen Käfig bilden,
ein Drahtende eines zu beschichtenden Drahtes (1) wird direkt von einer Vorratsspule im Bereich der einen Seitenscheibe (2) an einer der Querstangen (4) befestigt,
der Warenträger wird in eine definierte Drehbewegung versetzt wobei gleichzeitig die Drahtzufuhr in einer definierten Linearbewegung parallel zur Mittelachse (3) des Warenträgers erfolgt
der Draht (1) wird mit der aus den Einstellparametern (Drehbewegung/Linearbewegung) resultierenden Steigung auf den Käfig gewickelt,
bei Erreichen der zweiten Seitenwand (2) wird der Wickelvorgang unterbrochen und der nächste Käfig gebildet aus acht weiteren Querstangen (4), in definiertem Abstand zum ersten Käfig aufgelegt,
der bereits für den ersten Käfig beschriebene Wickelvorgang wird fortgesetzt, wobei die Linearbewegung nun in entgegengesetzter Richtung erfolgt
bei Erreichen der ersten Seitenwand (2) wird der Wickelvorgang abermals unterbrochen und der nächste Käfig gebildet aus weiteren Querstangen (4) in definiertem Abstand zum zweiten Käfig aufgelegt,
wie für den ersten Käfig beschrieben wird der Draht auf den dritten Käfig aufgebracht,
bis zum Erreichen des äußersten Käfigs wird analog verfahren, nach Aufbringen der letzten Lage Draht auf den äußersten Käfig wird das Drahtende an der Seitenscheibe (2) befestigt.

4. Verfahren nach einem der Ansprüche 1 bis 3, **dadurch gekennzeichnet, dass** der mit dem Draht (1) belegte Warenträger in eine Chargenbeschichtungsanlage eingebracht wird und dort die verschiedenen üblichen Vorbehandlungs- und Spülschritte und letztendlich das Beschichtungsbad durchläuft.

## Claims

1. A method for the rapid coating of a wire in a batch coating installation, wherein the wire (1) is wound onto a product carrier and is then passed through a coating installation in batch mode in the manner which is customary for the coating of a wire, **characterized in that** the product carrier is cylindrical in form and consists of two side plates (2) and a center spindle (3) which connects and stabilizes the two side plates (2), the side plates (2) each having an inner side, an outer side and a periphery and being produced in such a way that on the inner side of the plates rods (4) can be reversibly fixed between the side plates, at different distances from the center spindle, and that the periphery has encircling recesses.

2. The method as claimed in claim 1, **characterized in that** a drive wheel which allows rotary driving in the treatment baths of the coating installation is secured to the outer side of a side plate (2).

3. The method as claimed in claim 2, **characterized in that** the wire is wound onto the product carrier in the following way:
a plurality of cross-bars (4) with a defined arc spacing are secured to the side walls (2) at a defined distance from the center spindle (3), so that they form a cage, as it were,
a wire end of a wire (1) which is to be coated is secured directly from a stock reel in the region of one side plate (2) to one of the cross-bars (4),
the product carrier is set in a defined rotary motion, while at the same time wire is supplied in a defined linear motion parallel to the center spindle (3) of the product carrier,
the wire (1) is wound onto the cage with a pitch which results from the setting parameters (rotary motion/linear motion),
when the second side wall (2) is reached, the winding operation is interrupted and the next cage, formed from eight further cross-bars (4), is placed at a defined distance from the first cage,
the winding operation described above for the first cage is continued, with the linear motion now in the opposite direction,
when the first side wall (2) is reached, the winding operation is interrupted again and the next cage formed from further cross-bars (4) is placed at a defined distance from the second cage,
the wire is applied to the third cage as described for the first cage,
the procedure is continued in a similar way until the outermost cage is reached,
after the last layer of wire has been applied to the outermost cage the end of the wire is secured to the side plate (2).

4. The method as claimed in one of claims 1 to 3, **characterized in that** the product carrier to which the wire (1) has been fitted is introduced into a batch coating installation, where it passes through the various standard pretreatment and rinsing steps and ultimately the coating bath.

## Revendications

1. Procédé pour revêtir rapidement un fil dans un dispositif de revêtement discontinu, dans lequel le fil (1) est enroulé sur un support d'articles et est ensuite déplacé de façon discontinue dans le poste pour l'application d'un revêtement sur le fil selon une méthode classique, **caractérisé en ce que** le support d'articles a une forme cylindrique, et est constitué par deux disques latéraux (2) et un arbre central (3) qui relie les deux disques latéraux (2) et les stabilise, les disques latéraux (2) présentant chacun un côté intérieur, un côté extérieur et une périphérie, et sont réalisés de telle sorte que, sur le côté intérieur des disques, sont fixées de façon réversible, des tiges (4) selon des distances qui peuvent être variables par rapport à l'arbre central, et **en ce que** la périphérie présente des renfoncements répartis.

2. Procédé selon la revendication 1, **caractérisé en ce que**, sur le côté extérieur d'un disque latéral (2), est fixée une roue d'entraînement qui permet un entraînement en rotation dans les bains de traitement du dispositif de revêtement.

3. Procédé selon la revendication 2, **caractérisé en ce que** le fil est enroulé sur le support d'articles comme suit :
- on fixe aux parois latérales (2) plusieurs tiges transversales (4) avec une distance définie par rapport à l'arbre central (3) et avec une distance d'arc définie, de façon qu'ils constituent ensemble une cage,
- on fixe directement une extrémité de fil du fil (1) à revêtir , déroulé à partir d'une bobine d'approvisionnement, dans la région de l'un des disques latéraux (2) à une tige transversale (4),
- on déplace le support d'articles suivant un mouvement de rotation défini, de façon qu'en même temps, le fil soit guidé suivant un mouvement linéaire défini parallèle à l'arbre central (3) du support d'articles,
- on enroule le fil (1) sur la cage avec une progression résultant des paramètres de réglage (mouvement de rotation/mouvement linéaire),
- en arrivant à la seconde à la seconde paroi latérale (2), le processus d'enroulement est interrompu et la cage suivante formée de huit autres tiges transversales (4) est disposée sur la première cage avec un espacement défini,
- le processus d'enroulement décrit ci-dessus pour la première cage est poursuivi, le mouvement linéaire s'effectuant cependant dans une direction opposée,
- en arrivant à la première paroi latérale (2), le processus d'enroulement est de nouveau interrompu, et la cage suivante, constituée d'autres tiges transversales (4), est disposée sur la seconde cage avec un espacement défini,
- comme il a été décrit pour la première cage, le fil est enroulé sur la troisième cage,
- on poursuit le procédé d'une manière analogue jusqu'à la dernière cage et après application du dernier brin de fil sur la dernière cage, l'extrémité du fil est fixée au disque latérale (2).

4. Procédé selon l'une des revendications 1 à 3, **caractérisé en ce que** le support d'articles recouvert de fil (1) est transporté dans un dispositif de revêtement discontinu dans lequel il subit les différents traitements préalables et de centrifugation classiques et enfin le bain de revêtement.
